Europäisches Patentamt

European Patent Office

Office européen des brevets

(19)

(11) Publication number: **0 202 059**
**A2**

# EUROPEAN PATENT APPLICATION

(12)

(21) Application number: **86303379.1**

(22) Date of filing: **02.05.86**

(51) Int. Cl.⁴: **B 62 D 25/18**

(30) Priority: **03.05.85 GB 8511307**
**09.05.85 US 732439**
**01.11.85 US 794306**
**14.12.85 GB 8530858**

(43) Date of publication of application:
**20.11.86 Bulletin 86/47**

(84) Designated Contracting States:
**AT BE CH DE FR GB IT LI LU NL SE**

(71) Applicant: **Sullivan, Patrick F.**
**3645 Glen Oak**
**Eugene, OR 97405(US)**

(72) Inventor: **Sullivan, Patrick F.**
**3645 Glen Oak**
**Eugene, OR 97405(US)**

(74) Representative: **Skerrett, John Norton Haigh et al,**
**H.N. & W.S. SKERRETT Rutland House 148 Edmund**
**Street**
**Birmingham B3 2LQ(GB)**

(54) Spray suppression material and devices for road vehicles.

(57) A spray-suppressant flap (12;150) for use behind the wheels of a highway vehicle has a centrally located area (40;162) including forwardly protruding laterally-extending ribs or bars (42;164), and laterally outwardly located vertically-extending areas (44;206) including small forwardly protruding members (46;192) arranged so as to divert liquid flowing laterally from the channels between the bars (42;164) to flow downwardly. In one variation of the invention the bars (42;164) are upwardly convexly arcuate. The area (40;162) including the bars (42;164) may extend from top to bottom, or only in an upper portion of the flap. Ridges (168) may be provided between the bars (164) to deflect spray toward forwardly-extending surfaces of the bars. An upper marginal portion (122;154) of the flap may be of dovetail section so as to fit in a V-shaped downwardly-open channel (124) to mount the flap. The pattern of projections may be used for side skirts as well.

FIG. 12

EP 0 202 059 A2

Croydon Printing Company Ltd

SPRAY SUPPRESSION MATERIAL AND DEVICES FOR ROAD VEHICLES

The present invention relates to improvements in spray suppression material and devices for use behind and beside the wheels of road vehicles for the purpose of reducing or suppressing the production of fine spray and formation of spray clouds by the vehicle when travelling at speed on wet road surfaces.

As is well known, when a road vehicle, for example a large truck, is moving at speed spray is produced by the interaction of the tyres of the road wheels with a wet road surface, liquids being picked up from the road face and being thrown radially outwards by the tyres. Such liquids may originate as rain water, slush from snow, melting ice, mud and the like. Depending on various factors including speed, size and design of the vehicle, amount of surface water or slush on the roadway, wind conditions and road surface characteristics, this spray, especially when projected against a solid surface on the vehicle and deflected or spattered into smaller droplets which are likely to be caught in currents of turbulent air surrounding the vehicle, may form spray clouds of varying density which can seriously impair visibility both for other road users and for the rear vision of the driver of the spray-producing vehicle, leading to very hazardous driving conditions. This problem is moreover particularly serious with large heavy goods vehicles which nowadays commonly travel at high speeds in excess of 50 m.p.h. and, for this class of vehicle at least, minimum standards for the design and performance of spray control means are being more widely regulated in many countries by legislation. For example, in the United Kingdom, requirements for spray control devices and performance characteristics therefor have been covered by a British Standard BS AU200/1/2 introduced in September 1984 and legislation has been enacted whereby compliance with this Standard is becoming compulsory for heavy goods motor vehicles exceeding a prescribed maximum gross weight.

The problem is not of course solved merely by providing shields such as conventional wheel guards, wheel flaps or valances having comparatively hard, planar surfaces designed to intercept and contain the water or other fluid matter such as mud and slush thrown up by the road wheels because when such water or fluid matter in the form of a coarse spray or large droplets is projected against such surfaces it tends to break up into very fine droplets which then become entrained and escape in surrounding currents of turbulent air to generate the troublesome clouds of fine spray. Accordingly, in addition to providing structure designed to shield the road wheels and to contain the coarse spray or large droplets of liquid water or other fluid thrown up directly off the road surface, it is also necessary to provide spray suppression material or a device designed to absorb or dissipate the kinetic energy of such liquid or fluid in order to promote steady drainage and reduction of the aforesaid tendency for it to break up into fine spray. This spray suppression material will generally form part of or be incorporated in shielding or containment devices such as wheel flaps (so-called "mudflaps") and valances or side skirts.

Various designs of spray suppression material and spray suppression devices, especially in association with shielding devices such as wheel flaps, have already been proposed. Of these, however, a number are not able to meet the performance standards now required, while others, although perhaps capable of performing well under ideal conditions, are prone to lose performance and to become ineffective under adverse conditions as a result, for example, of becoming readily clogged by mud or packed snow. Also, some designs can be relatively costly to produce and/or have other practical disadvantages so that there is considerable scope for further developments and improvements in this field.

Several known prior art designs of spray suppression material and devices have included a spray receiving surface covered, usually uniformly, with a pattern of spaced-apart discrete elongate projections, for example blade elements or flexible finger-like protuberances, forming a spray suppressing configuration adapted to present an increased surface area to the coarse fluid spray thrown up by the road wheels so as to absorb or dissipate much of the kinetic energy therein, enabling the liquid water component to collect and drain relatively slowly through drainage paths defined between the finger-like protuberances.

For example, an improved type of spray-reducing flap is disclosed in Reddaway U.S. Patent No. 3,899,192, which teaches the provision of a plurality of elongate, resilient blade elements distributed over the surface of a flap. The blade elements project outwardly from the flap, extending generally toward the wheels of a vehicle in random, angular, crossing relationship to each other, to present a tangled mass of such blade elements for the purpose of absorbing and draining away fluid which strikes the flap.

Such a tangled mass of blade elements, however, has been found to retain mud, snow, and ice to an undesirable degree, and once appreciable amounts of mud or ice have been trapped in such a surface the flap has a much lower efficiency in limiting the amount of spray found in the vacinity of the wheels behind which such flaps are used.

In another particular example of the above-mentioned type of design, developed jointly by the present applicant and Russell R. Wakefield and disclosed in European patent specification No. 0134156, a generally planar base surface of a mudflap is covered with a plurality of specially profiled elongate flexible fingers projecting outwardly at a small angle to the base surface, and except over a lower marginal area of the mudflap these fingers are arranged in a uniform pattern of staggered columns of relatively densely packed overlapping rhombic shaped groups defining between these columns downwardly extending unobstructed flow paths for liquid drainage. The flexible form of the fingers tends to inhibit retention of solids such as mud and snow, but over the lower marginal area which represents the area most likely to pick up and retain mud and snow and least likely to generate the most fine spray a more open pattern of the flexible fingers is provided. This enhances even further the tendency to shed any mud or snow and further reduces the risks of clogging.

The above design as described in the aforesaid European patent specification thus embodied an appreciation of the fact that localised operational conditions and the most relevant functional considerations may differ in different areas or zones of the spray-receiving surface, and that the design of the spray suppression surface configuration may advantageously also be varied to relate more clearly to such different functional considerations in different areas or zones instead of being uniform over substantially the entire surface area concerned. However, even with the improved design of EU0134156, it has been found that some improvements in overall performance are desirable, especially in relation to the rate at which fluid can be removed from a central zone of the spray-receiving surface which represents a region that, in use, generally tends to receive the highest density of the coarse spray or fluid material projected from the road wheels.

Such other publications as U.S. Patents Nos. 4382606 and 4398739, U.K. Patent No. 1101143 and published U.K. Patent Applications Nos. 2146598A, 2004823B, 2132148A, and U.K. Design Registration 1,022,999 disclose other types of spray-reducing flap designs. However, greater spray suppression is still desired.

Various further improvements are provided by the present invention which incorporates a concept of providing a central zone of a sheet or panel of spray suppression material with a surface configuration designed primarily to promote efficient and rapid transfer of liquid or fluid material away from said central zone into laterally adjacent collecting regions or zones which are provided with a different surface configuration designed primarily to absorb or dissipate the energy of the liquid or fluid material in such a manner as to progressively reduce the velocity and deflect such liquid or fluid material into drainage flow paths. For the latter purpose, a surface configuration provided by a pattern of spray control protuberances in the form of spaced-apart discrete elongate projections, such as flexible finger-like projections as already referred to, can be very effective, especially if formed and arranged as taught in EU0134156. For said central zone, however, in order to apply the above-mentioned basic concept it has been appreciated that the surface configuration needs to present fewer obstructions and greater directional guidance in respect of lateral flow than is generally possible with a pattern of spaced-apart discrete elongate projections.

Accordingly, the present invention in one aspect provides spray suppression material, for use as or in a device for reducing the production of clouds of spray by a road vehicle travelling at speed on wet road surfaces, comprising a base panel of planar sheet material having a spray-receiving surface, that is, a surface which in use is presented towards a road wheel of the vehicle, having a plurality of spray control protuberances arranged in a predetermined pattern and extending outwardly therefrom, said pattern of spray control protuberances comprising a series of parallel ribs extending transversely across a central zone of the panel to define therebetween a series of parallel open-ended transverse channels and, distributed over zones adjacent to and bounding said central zone at either end of said transverse channels, a plurality of spaced-apart discrete elongate projections arranged to co-operate to progressively absorb or dissipate the kinetic energy of fluid discharged from the ends of said channels and to deflect such fluid into drainage flow paths defined between said projections.

From another aspect the invention provides a spray suppression device comprising a panel of sheet material of which a central zone is formed with transversely extending channels adapted to convey liquid or fluid impinging on said central zone towards laterally adjacent collection zones either side thereof, wherein said collection zones are covered with a plurality of spray-control protuberances adapted to absorb or dissipate kinetic energy of the moving liquid or fluid and progressively to deflect said liquid or fluid into downwardly extending flow paths.

The base panel will generally be of substantially rectangular shape and be intended to be oriented in a substantially vertical plane when in use. In preferred embodiments said central zone will also be of a rectangular shape having a width and, usually, a depth smaller than the corresponding dimensions of the base panel so that it is bounded by adjacent upper, lower and side zones of which each may be covered with said spaced-apart discrete elongate projections providing the spray-control protuberances in these areas.

Preferably, these spaced-apart discrete elongate projections, especially in the side zones, are all in the form of flexible fingers of frusto-conical tapering form which, as in the arrangement disclosed in EU0134156, each terminate in a substantially hemispherical tip and have a height at least $2\frac{1}{2}$ times as great as their maximum diameter at their base, advantageously with a central axis inclined to the plane of the base panel at an angle in the range of 2° to 15° in a median plane perpendicular to the plane of the base panel and parallel to the sides of the latter. These flexible fingers are, moreover, preferably arranged in a regular predetermined pattern of rows and columns which may vary in density further to provide a pattern of geometric groups defining the drainage flow paths. The pattern of fingers over the whole area of the base panel outside said central zone may advantageously be the same as that described in EU013456, i.e. a series of staggered vertical columns of rhombic groups with a lower density pattern of staggered horizontal rows in a lower marginal area of the lower zone in order to further reduce any tendency for retention of solid matter from mud or snow and ice in this region.

In said central zone, the parallel ribs defining the transverse channels may be straight throughout their length extending horizontally across the panel intermediate the adjacent side zones, or they may be arcuately curved to some extent, especially adjacent their ends, so as to commence deflecting the flow of liquid or fluid along the channels therebetween in a direction towards the lower part of the panel as or before it leaves the channels; alternatively, the end portions of the ribs adjacent the ends of the channels may be inclined towards the lower part of the panel to produce the same effect. Preferably, the height of the ribs above the plane of the base panel is substantially the same as the height of the fingers or other spray control protuberances in the adjacent zones, while the spacing between the ribs which defines the width of the channels is advantageously somewhat greater, for example between 10% and 30% greater, than their height above the base surface.

Also, the cross-sectional shape of the transverse channels is important for optimum performance especially in respect of the profile of the base surface thereof, as will hereinafter be more fully described.

It is of course also important that the collecting zones adjacent the ends of the channels either side of the central zone are of sufficient width to cope with the flow of liquid or fluid from the transverse channels of the central zone and to absorb or dissipate the kinetic energy thereof to a satisfactory extent under normal operational conditions. Commonly, at least for mudflaps, the width of each of the side zones adjacent the ends of these transverse channels will be within the range of 1/4 to 1/2 of the width of the central zone throughout at least the greater part of the depth of said central zone. Moreover, again as hereinafter more fully described, the precise arrangement of the pattern of the flexible finger-like projections in the regions adjacent the open ends of the transverse channels can be important and certain modifications to the strict rhombic grouping can be advantageous.

An important feature of preferred embodiments also resides in the fact that at least the major part of the spray suppression material can be manufactured in one piece as a unitary structure, advantageously as a moulding of firm but flexible material such as rubber or suitable plastics material, with the different zones containing different patterns of spray control protuberances being integrally incorporated therein. However, insofar as vertical

8

0202059

reinforcing side ribs at the outer boundary edges of the devices are concerned the depth of these ribs can conveniently be increased by fitting a separately-formed cap member. An increased depth can be beneficial as an additional safeguard to contain fluid which manages to reach this boundary region, but by using a separate cap member the need is avoided for a more costly mould designed to form the whole of these vertical side ribs in one piece with the remainder of the device.

In utilising the spray suppression material of this invention it will generally be incorporated in or made up into spray suppression devices such as wheel flaps and valances adapted to be suspended on a vehicle so as to extend in a vertical plane adjacent the road wheels thereof, and the invention also embraces wheel flaps, valances and like devices comprising the spray suppression material herein specified.

In at least preferred embodiments, the present invention provides, according to an alternative summary statement, a spray-reducing surface configuration for a flap behind or alongside a vehicle's wheels, in which a centrally located first area of a base surface of the flap includes forwardly protruding, generally horizontally extending parallel bars to catch fluid thrown or blown toward the front of the flap. Adjacent this central first area of the flap is a second area in which a pattern of smaller forwardly projecting elements is provided to receive spray emanating from the wheels and convert such spray into a downward flow of liquid along the base surface of the flap. The second area, adjacent the centrally-located bars, also receives lateral flow of liquid from between the ends of the bars, slowing the lateral movement of the liquid and allowing gravity and air currents along the flap surface to deflect the flow of the liquid toward a downward direction along the base surface of the flap.

The bars may be straight, extending horizontally, may have downwardly sloping opposite end portions, or may be generally parallel curved bars which are upwardly convex, so that flow of liquid along and between the bars is directed downwardly and laterally outwardly by the bars.

In one embodiment of the invention, a low, forwardly-projecting ridge is provided in the space between adjacent ones of the bars so that droplets striking the sloping surfaces of the ridge are splashed toward the adjacent surfaces of the forwardly-projecting bars, rather than being splashed outwardly away from the flap. These ridges may extend the entire length of the parallel forwardly-projecting bars, or may extend only along the central portions of the bars, between the downwardly sloping opposite end portions.

The pattern of projections in a second area surrounding the area of the bars may be similar to that disclosed in the previously mentioned co-pending EU 0134156, or it may be a different pattern of short, narrow, arcuately curved diverting members or bars oriented diagonally on the base surface so as to slow and deflect laterally flowing liquid exiting from areas between bars downwardly along the surface of the flap.

A pattern of parallel downwardly-sloping rows of forwardly-extending flexible fingers may be provided between the ends of the forwardly-extending bars and the area of the flap including the pattern of projections similar to that disclosed in the previously-mentioned co-pending EU 0134156.

A top margin of flaps in accordance with the invention preferably includes a flared-out area which can be engaged by a downwardly open V-shaped support channel.

Also, in preferred embodiments, a lap joint extends horizontally along the face of the flap permitting replacement of the bottom section of the flap and facilitating production of similar flaps of a standard width but different lengths. This is an important practical feature per se.

By way of example, embodiments of the invention will be further described and illustrated with reference to the accompanying drawings in which:

FIGURE 1 shows a rear portion of a truck equipped with a spray-suppressant flap constructed according to the present invention;

FIGURE 2 is a front elevational view of the spray-suppressant mud flap shown in FIGURE 1;

FIGURE 3 is a sectional view of the mud flap shown in FIGURE 2, taken along line 3-3;

FIGURE 4 is a detail view of a portion of the spray-suppressant flap shown in FIGURE 2, at an enlarged scale;

FIGURE 5 is a detail view of the portion of a spray-suppressant flap shown in FIGURE 4, at a further enlarged scale;

FIGURE 6 is a sectional side view, taken along line 6-6, of the portion of a spray-suppressant flap shown in FIGURE 4, at an enlarged scale;

FIGURE 7 is a view similar to that of FIGURE 6, taken along line 7-7, showing a flap which is a variation of that shown in FIGURE 2;

FIGURE 8 is a front elevational view of a spray-suppressant flap which is an alternative embodiment of the present invention;

FIGURE 9 is a view of a portion of the flap shown in FIGURE 8, at an enlarged scale;

FIGURE 10 is a side elevational view of an upper marginal portion of the flap shown in FIGURE 2;

FIGURE 11 is a side elevational view of a portion of the flap shown in FIGURE 2, at an enlarged scale, showing a lap joint between portions of the flap;

FIGURE 12 is a front elevational view of a spray-suppressant flap which is a second alternative embodiment of the present invention;

FIGURE 13 is a front elevational view of a portion of the flap shown in FIGURE 12, at an enlarged scale;

FIGURE 14 is a sectional view of a portion of the flap shown in FIGURE 12, taken along line 14-14, at an enlarged scale;

FIGURE 15 is a sectional view of a portion of the flap shown in FIGURE 12, taken along line 15-15, at an enlarged scale;

FIGURE 16 is a front elevational view, partially broken away and with only some details illustrated, of another slightly modified mudflap in accordance with the invention;

FIGURE 17 is a fragmentary view on a larger scale of a portion of the mudflap of FIGURE 16;

FIGURE 18 is a vertical cross-sectional view taken along the line XVIII-XVIII of FIGURE 17;

FIGURE 19 is a view similar to FIGURE 17 but showing a still further modification; and

FIGURE 20 is a diagrammatic cross-sectional view showing a vertical side edge reinforcing rib of the flap fitted with a separate cap member according to a further modification.

## Detailed Description of the Invention

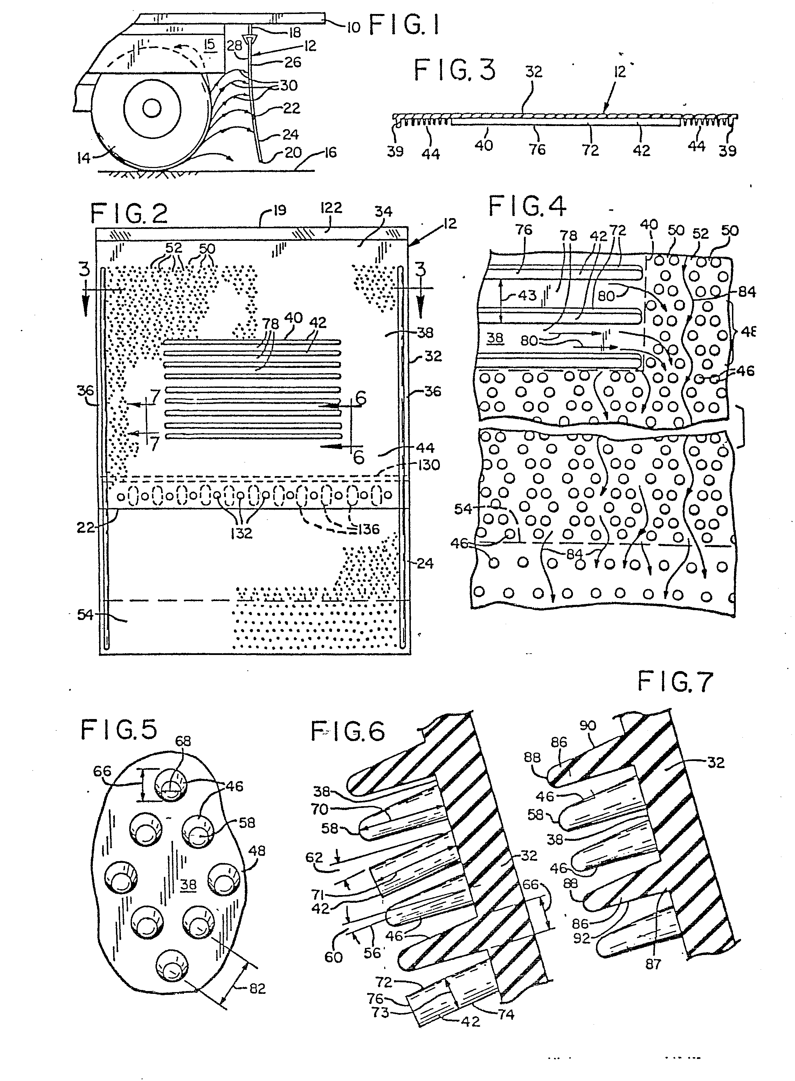

Referring now to the drawings, in FIG. 1 a truck 10 is equipped with a vertically hanging spray-suppressant flap 12 located rearwardly from its wheels 14, and a similar side skirt 15 located alongside its wheels 14, to receive and coalesce fluid droplets thrown from the wheels 14 or other surfaces as the truck 10 moves on a wet roadway surface 16. The flaps 12 are suspended from hangers 18 which are fixedly mounted on the truck 10, and extend downwardly to a bottom 20 of the flap spaced a short distance above the road surface 16. The bottom 20 may, for example, be within four to six inches above the road surface 16. Preferably, the flap 12 of material embodying the present invention may be molded of a flexible material such as a synthetic rubber. For the sake of convenience and because of size limitations of available molds, it may be desirable to provide a horizontally-extending lap joint 22 to fasten a lower portion 24 to an upper portion 26 of the flap 12.

As the truck 10 moves along a highway, a majority of spray droplets thrown from the wheels 14 typically strikes against the front side 28 of the flap 12 above mid-height, traveling along paths similar to those indicated by the arrows 30.

Referring now to FIGS. 2-7, a flap 12 according to the present invention includes a base sheet 32 thick enough to be suitably rigid and heavy. As shown in the FIG. 2, the base sheet 32 includes a top margin 34 and lateral margins 36, and a generally flat base surface 38 on the front side 28 of the flap 12, which ordinarily faces toward the wheels 14. Raised ribs 39 are provided in the lateral margins 36, extending generally vertically along the flap 12. Each rib 39 has a rounded front edge and a height of about 5/8 inch (1.6 cm) as shown in FIG. 3. The ribs 39 add stiffness to the base sheet 32, should it be made of a very flexible material, and serve to constrain the flow of liquid downward along the base surface 38, as will be explained more fully subsequently.

The base sheet includes a spray-suppressing first area 40 located where the heaviest incidence of liquid droplets is expected to be received. This location, then, for a normal flap installation, is a laterally central one, and closer to the top 19 of the flap 12 than to its bottom 20. The first spray-suppressing area 40 includes a group of parallel, laterally-extending, forwardly projecting bars 42 molded integrally with the base sheet 32 of the flap 12 and of the same material. The bars 42 are provided for the purpose of initially catching and coalescing the impinging drops of spray and conducting the liquid laterally toward the lateral margins 36. A vertical spacing 43 between corresponding parts of adjacent bars 42 is preferably about 0.75 inch (1.9 cm), although a spacing 43 in the range of 0.5 inch to 1.0 inch (1.3-2.5 cm) could be used.

Surrounding the first area 40 is a spray-suppressant second area 44 of the flap 12. The second area 44 includes a plurality of upstanding flexible fingers 46 extending from the base surface 38 and distributed over the second area 44, preferably being arranged in a pattern such as that shown in FIG. 4. Such a pattern consists of a plurality of diamond-shaped rhombic groups 48, each including eight fingers 46. Vertically adjacent ones of the diamond-shaped groups 48 overlap one another, so that one finger 46 is the end of each of two adjacent groups 48. (The pattern of the groups 48 may also be thought of as single fingers 46 located between vertically adjacent hexagonal groups of six fingers 46.) The adjacent overlapping rhombic groups 48 of fingers 46 are arranged as parallel rows 50 of groups 48. The rows 50 define channels 52 along the base surface 38 between the rows 50, the groups 48 in each row 50 being offset longitudinally with respect to the groups 48 in adjacent rows 50 so that the channels 52 are of a zig-zag, rather than straight, configuration, as may be seen in FIG. 4. The channels 52 extend generally vertically so as to conduct a flow of liquid downwardly along the spray-suppressing second area 44 of the base sheet 32 when it is hanging as shown in FIG. 1, suspended by attachment of the top margin 34 to the truck 10.

A spray-suppressant third, or lower marginal, area 54 of the forward side 28 includes a pattern of fingers 46 on the base surface 38 which is more open than that in the second area 44, giving additional unobstructed area of the base surface 38 between the fingers 46. Such a third area 54 may extend over the bottom 3 inches (7.6 cm) of the flap 12, for example, and is provided in order to enhance shedding of snow or ice where its accumulation is otherwise likely to be heaviest.

Referring now to FIGS. 4, 5, and 6, it will be appreciated that the bars 42 and the individual fingers 46 are inclined, although parallel with one another, at an angle of a few degrees away from being perpendicular to the generally planar base surface 38 of the base sheet 32 of the flap 12. The fingers 46 are tapered and generally circular in cross section. Each has a central axis 56 and a generally frusto-conical outer surface with a hemispherical tip 58. Ordinarily, the fingers 46 are inclined slightly downward from the perpendicular, so that the central axis 56 of each finger 46 extends at an angle 60 of about 2-15° below the horizontal, when the flap 12 is hanging vertically. For example, the central axis 56 of each finger is preferably about 4° below the horizontal when the flap 12 is hanging vertically. The frusto-conical outer surface of each finger defines an angle of about 4° relative to the central axis 56, resulting in the uppermost surface of each finger preferably being inclined at an angle 62 of approximately 8° below horizontal, while the lowermost surface is approximately horizontal.

Each finger 46 is tapered, for example, from a diameter 66 (at its base) of approximately 3/16 inch (0.47 cm) to a tip diameter 68 of approximately 1/8 inch

0202059

(0.3175 cm), with the tip 58 being generally hemispherical. Each finger 46 has a length 70 which is preferably at least about 2-1/2 times as great as its diameter at its base, so that it is independently flexible along its length 70, in order to promote shedding of ice and provide additional surface area beyond that of a conventional flat flap of the same size as the flap 12. For example, the fingers 46 may preferably be about 1/2 inch (1.3 cm) in length. The flexibility provided in this construction permits the fingers 46 individually to absorb some of the kinetic energy of fluid droplets thrown toward the flap 12, contributing to reduction of the amount of spray associated with a vehicle 10 equipped with flaps 12.

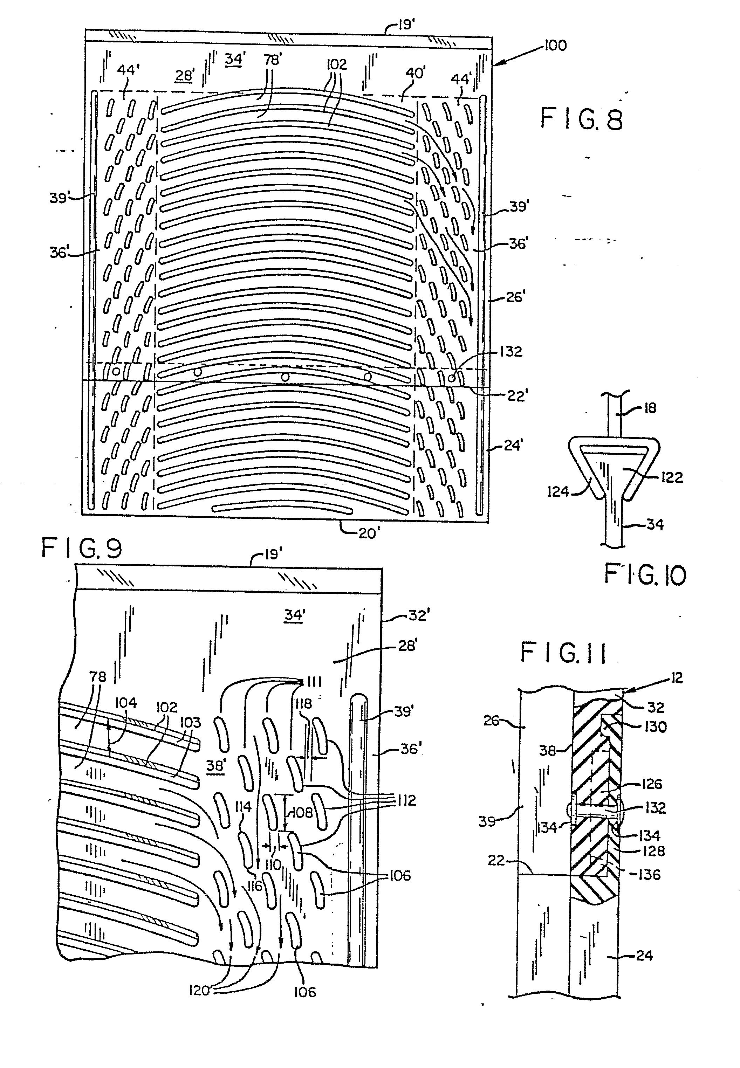

The bars 42 are, in one preferred embodiment of the invention, generally rectangular in cross section and have a forwardly-projecting width 71 of about 1/2 inch (1.3 cm), and a thickness 73 of about 3/16 inch (0.47 cm), as may be seen best in FIG. 6. FIG. 6 shows, in section, a portion of the flap 12 sloped as it might be if rearwardly deflected by the relative wind generated by the vehicle 10 moving forward. Each bar 42 has an upper surface 72 and a lower surface 74 which are parallel with each other. A front edge surface 76 is perpendicular to the upper surface 72, and the bars 42 are downwardly sloped, parallel with the central axes 56 of the fingers 46. This configuration provides horizontal channels 78 between adjacent bars 42. Spray received against the spray-suppressant first area 40 of the flap 12 is initially caught between the bars 42 and can flow laterally through the horizontal channels 78 between bars 42 toward the lateral margins 36. As the liquid exits from the channels 78 it encounters the groups 48 of fingers 46 in the portion of the second area 44 adjacent the ends of the bars 42. The groups 48 of the fingers 46 slow the lateral movement of liquid and permit it to be diverted by gravity and wind as indicated by the arrows 80, to flow downwardly through the open channels 52.

The distance 82 between the central axes 56 of the closest adjacent fingers 46 within each group 48 is preferably about 1/4 inch (0.6 cm), giving each rhombic, or diamond-shaped, group 48 a width of 1/2 inch (1.3 cm) between the central axes 56 of the opposite corner fingers 46, and each channel 52 preferably has the same width. Thus, less than half of the second area 44 of the flat base surface 38 is occupied by the fingers 46. However, spray droplets impinging upon the spray-suppressant second area 44 of the base sheet 32 are likely to encounter the surface of one of the fingers 46 initially, or to rebound against one of the fingers 46 if they first impinge upon a portion of the flat base surface 38. Such droplets will thereafter coalesce and be blown or drawn by gravity into one of the channels 52 and drain downward along the channels 52 in the direction indicated by the arrows 84. The fluid can then drain from the lower margin of the flap 12 with a reduced likelihood of being suspended in the air as spray or mist.

When the vehicle 10 is moving forward, creating a considerable amount of relative wind against the front side 28 of the flap 12, the flap 12 is deflected as shown in FIG. 6 into a rearwardly and downwardly sloping attitude. As a result, the bars 42 and fingers 46 are then more steeply downwardly inclined than when the flap 12 is hanging vertically, presenting more of the surface of the bars 42 and fingers 46 across the predominant paths of movement, indicated by arrows 30, of spray droplets toward the flap 12. Most such fluid impinging on the first area 40 is caught between the bars 42 and then deflected or blown laterally through the channels 78 toward the groups 48 of fingers 46. Spray impinging on the second area 44, when it encounters the fingers 46, flows along the surfaces of the fingers 46 until it reaches the flat base surface 38 and can thereafter drain downwardly through the channels 52. The lateral margins 36 also act as channels for flow along the inwardly facing sides of the vertical ribs 39.

As is shown in FIG. 7, the first area 40 may include bars 86 which, instead of having the rectangular cross section of the bars 42, are tapered from a broad base 87 to a rounded edge 88, so that the profile of the bars 86 is the same as that of the fingers 46. Upper surfaces 90 of the bars 86 are parallel with the uppermost surfaces of the fingers 46, and lower surfaces 92 are parallel with the lowest surface of fingers 46.

Referring now to FIGS. 8 and 9, a flap 100 which is an alternative embodiment of the invention is generally similar to the flap 12, having a top 19', a bottom 20', a lap joint 22', a lower portion 24', an upper portion 26', and a front side 28'. A base sheet 32' includes a top margin portion 34' and lateral margins 36' of a base surface 38'. Ribs 39' are located along lateral margins 36'.

A first spray-suppressant area 40' includes bars 102, which are upwardly convexly arcuate along their lengths. The bars 102 have a radius of curvature in which they extend generally horizontally although their lateral ends are downwardly inclined by, for example, 20-30°, and preferably 25°. The first area 40' extends laterally across a central region of the front side 28'. The bars 102 may have the rectangular profile of the bars 42, or the tapered profile of the bars 86, and like the bars 42 and 86, are inclined slightly downward toward their leading or front edge 103. Correponding points on the bars 102 are spaced vertically apart from one another by a spacing distance 104 of about 3/4 inch (1.9 cm), defining arcuate channels 78' for collecting and directing spray laterally. While other spacing distances 104 might be useable, for example, spacings within the range of 0.5-1.0 inch (1.3-2.5 cm), the 3/4-inch distance is preferred. The first spray-suppressant area 40' may extend over the full height of the flap from the top margin 34' to the bottom 20' of the flap 100. A second spray-suppressant area 44' is located adjacent the first area 40', extending as a vertically-oriented rectangle located between the first area 40' and the respective lateral margin 36' on each side. Within the second area 44' elongate, forwardly-projecting diverter members 106 are aligned in a pattern as shown in FIG. 9. Each diverter member 106 is elongate and preferably arcuate, as seen in front view, with its length oriented diagonally on the base surface 38'. Each of the diverter members 106 has a height 108 approximately equal to the distance 104 between consecutive ones of the bars 102 and a width 110 approximately equal to the thickness 73' of each of the bars 102 adjacent the base surface 38'. The diverter members 106 are aligned in a regular pattern of vertical rows 111 and horizontal rows 112, with the individual diverter members 106 of vertically adjacent horizontal rows 112 being staggered laterally. Each of the diverter members 106 is oriented diagonally with an upper end 114 being farther than its lower end 116 from the nearest lateral margin 36'. The lateral spacing 118 between adjacent ones of the diverter members 106 in each row 112 is sufficient that open channels 120 extending vertically are defined between the vertical rows of diverter members 106. Thus spray which impacts against the first area 40' is diverted laterally outwardly and downwardly toward the second area 44' in which the diagonally oriented diverter members 106 further divert the flow of spray toward a diagonally downward and outward direction and thence into the vertical, downwardly-extending channels 120 leading toward the roadway 16.

Referring to FIG. 10, to facilitate attaching the flaps 12 to the truck 10, the top margin 34 is free from forward projections and includes an outwardly flared retaining edge 122 in the form of a dovetail. The retaining edge 122 may then be received by sliding the flap laterally with the retaining edge 122 within a downwardly open V-shaped channel 124 fixedly mounted on the truck 10. Fasteners (not shown) may then be used to close an exposed end of the channel 124 to prevent the flap 12 from sliding laterally out of the channel 124.

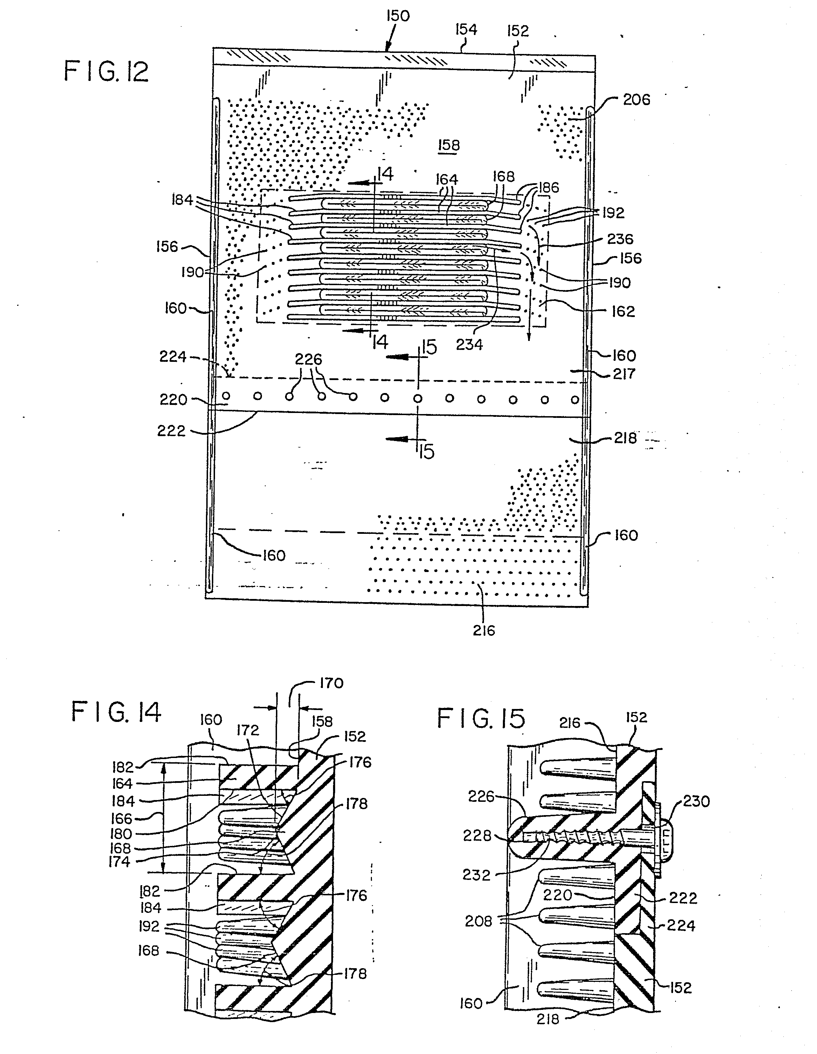

As shown in FIG. 11, the lap joint 22 is a scarf joint in which a lower rear marginal portion 126 extends rearwardly from a back side of the upper portion 26 of the flap 12, and an upper rear portion 128 extends upwardly from the lower portion 24, and includes a forwardly extending finger strip 130 which fits above the lower rear marginal portion 126. Fasteners such as small bolts or rivets 132 may be spaced apart from one another at intervals along the joint 122 to hold the upper and lower portions of the flap together. Reinforcement may be provided by metal washers 134 molded into place and by interlocking vertically oriented elongate projections 136 on the front side of the upper rear portion 128 and cavities in the rear side of the lower rear marginal portion 126 which matingly receive the projections 136 to provide stiffening support for the lower portion 24. This joint makes replacement of the lower portion 24 of a flap 12 a simple matter, should it be damaged as may occur in backing the truck 10 over a high curb.

Referring now also to FIGS. 12-15, a spray-suppressant flap 150 is yet another alternative embodiment of the present invention. As does the flap 12, the flap 150 includes a base sheet 152 similar to the base sheet 32. The base sheet 152 includes a top margin 154, lateral margins 156, and a generally flat base surface 158 on the front side of the flap 150, which ordinarily faces toward the wheels of a vehicle on which the flap is mounted. Raised ribs 160 are provided in the lateral margins 156 and are similar to the ribs 39 of the flap 12.

A spray-suppressing first area 162 corresponds generally with the first area 40 of the flap 12, and includes a group of parallel, laterally-extending, forwardly-projecting bars 164 molded integrally with the base sheet 152. The bars 164 extend laterally over a majority of the width of the flap 150, and corresponding parts of adjacent bars 164 are separated vertically by a spacing 166 which is preferably about 0.75 inch (1.9 cm), although a spacing 166 in the range of 0.5 inch to 1.0 inch (1.3-2.5 cm) could be used.

Between adjacent ones of the bars 164 are laterally-extending, forwardly-projecting ridges 168, which project forward a significantly smaller distance than do the bars 164. The ridges 168 extend laterally along the base surface 158 over a distance of more than half the length of the bars 164, and preferably greater than one third of the width of the flap 150. Each ridge 168 preferably projects forwardly from the base surface 158 a distance 170 of approximately 1/8 inch (0.3 cm) and is centrally located between the bars 164 above and below it. Each ridge 168 includes sloping surfaces 172 and 174 which form respective interior angles 176 and 178 with the adjacent bottom surface 180 and top surface 182 of the adjacent bars 164. The bars 164 extend forwardly generally perpendicular to the base sheet 152, with their top surfaces 182 and bottom surfaces 180 preferably substantially parallel with one another. The angles 176 and 178 are preferably equal and in the range of about 65-80°, an angle of 72° having been found to be particularly effective.

Each of the bars 164 also includes a pair of opposite end portions 184 and 186, each about 1-1/2 inches (2.8 cm) long, which extend laterally beyond the ends of the ridges 168 at a downward slope as seen in FIGS. 12 and 13, defining an angle 188 with the central horizontal part of the respective bar 164 of less than 5° and, preferably, equal to about 3° (FIG. 13). Aligned with each of the end portions 186 of the bars 164 is an outwardly and downwardly sloping row 190 of forwardly projecting fingers 192 essentially similar to the fingers 46, a broken line being used in FIG. 13 to indicate a row 190. Each row 190 extends downwardly at an angle 194 of slope with respect to the horizontal central portions of the bars which is greater than the angle 188. For example, the angle 194 may be in the range from 6-16°, and is preferably about 11°. Each row 190 includes two or three fingers 192, with the use of three fingers being preferred when the length of the bars 164 is greater than, for example, about 12 inches (30.5 cm)

Individual fingers 192 of adjacent rows 190 are located vertically in line with one another, forming vertical rows 196 and vertical channels 198 on the base surface 158. The channels 198 are defined by a lateral spacing 200 between corresponding parts of fingers 192 forming the several vertical rows 196. This lateral spacing 200 is, for example, about 0.35 inch (0.9 cm).

A zig-zag, vertically oriented row 202 of fowardly-extending flexible fingers 204, which are also essentially similar to the fingers 46 of the flap 12, is located along the ends of the rows 190 separated from the end portions 184 and 186 of the bars 164. The fingers 204 are spaced apart from one another by a distance, preferably, of 1/4 inch (0.6 cm), between corresponding parts of adjacent fingers 204.

Spaced laterally outward from the row 202, within a spray-suppressing second area 206 of the base sheet 152 (corresponding with the second area 44 of the flap 12) are a plurality of forwardly-extending flexible fingers 208, essentially similar to the fingers 46 of the flap 12 and arranged in a similar pattern consisting of a plurality of rhombic groups 210 similar to the rhombic groups 48 of the flap 12. The groups 210 are arranged in parallel, generally vertical rows 212, with adjacent vertical rows 212 being vertically offset to form zig-zag channels 214 extending generally vertically along the base surface 158, so as to conduct a flow of liquid downwardly along the base surface 158 within the spray-suppressing second area 206. While the fingers 208 are shown extending substantially perpendicularly from the base surface 158, it is clear that they, and the fingers 192 and 204, might all also be downwardly inclined as are the fingers 46 of the flap 12 previously described.

A spray-suppressant third, or lower marginal, area 216 of the flap 150 corresponds with the area 54 of the flap 12, and, similarly, includes fingers 208 which are more widely separated than those in the rhombic groups 210.

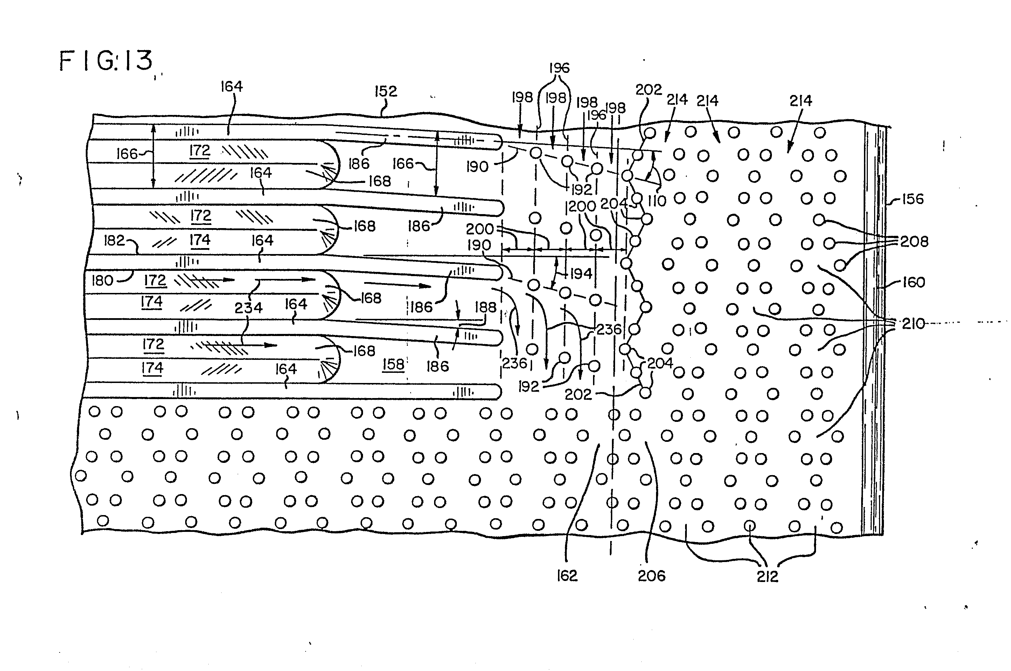

To provide the maximum spray suppression, the flap 150 will ordinarily be mounted on a vehicle so that its lower end extends close to the ground when a vehicle is normally loaded. This will result in wear of the lower margin as it is struck by gravel and other material along a roadway. In order to permit repair of the flap 150, the base sheet 152 may include an upper portion 217 and a lower portion 218 interconnected with one another by a lap joint 220, shown in FIGS. 12 and 15. Preferably the overlapping portion 222 of the upper portion 216 is substantially thicker than the upwardly extending overlapping portion 224 of the lower portion 218, so that the lower portion 218 will be more likely to pull away from the upper portion 217 without damaging the upper portion 217 thereby. A plurality of generally conical portions 226 molded to extend forwardly from the overlapping portions 222 define bores 228, and corresponding holes 230 are provided in the overlapping portion 224 of the lower portion 218 to receive fasteners such as threaded screws 232. The screws 232 fit tightly in the bores 228 and preferably are equipped with round heads having hexagonal sockets (Allen Sockets) 234, by means of which the screws 232 may be fastened into the bores 228 to attach the lower portion 218 to the upper portion 217. The holes 230 may be larger in diameter than the bores 228, providing a somewhat looser fit around the screws 232 than that provided within the bores 228, to enhance the ability of the lower portion 218 to separate from the upper portion 217 without damaging the upper portion 217, thus making it possible to replace the lower portion 218 and thereby restore the flap 150 to a satisfactory condition. Thus, when a vehicle equipped with the flap 150 is backed over a curb, pinching the lower portion 218 between a wheel and the curb, the lower portion 218 may be torn away from the upper portion 217 without damaging the upper portion 217. For the same reason, the bores 228 and holes 230 are preferably located in the upper third of the overlapping areas 222 and 224.

The flap 150 described in the preceding paragraphs performs similarly to the flap 12, but has the capacity for superior suppression of spray by virtue of the deflection of spray from the sloping surfaces 172 and 174 of the ridges 168 onto the surfaces 180 and 182 of the bars 164. This results in a greater quantity of spray being diverted to flow laterally as indicated by the arrows 234. As such laterally moving liquid encounters the downwardly sloping opposite end portions 184 and 186 at the respective ends of the bars 164 it is diverted downwardly and, upon reaching the extreme ends of the downwardly sloping end portions 184 and 186 the liquid is free to flow downwardly along the base surface 158 through the channels 198, as indicated by the arrows 236. The downward slope of the row 190 of fingers 192 helps to turn the flow indicated by the arrows 234 to the downward direction indicated by the arrows 236, while the lateral spacing 200 provides sufficient capacity within the channels 198 to accommodate downward flow of the liquid diverted into the channels 198. This enhances the ability of the pattern of bars 164 and ridges 168 to carry away spray which impinges upon the first area 162 of the flap 150, because of the location of the first area 162 where it receives the greatest volume of water from the wheels of a vehicle equipped with the flap 150.

28

0202059

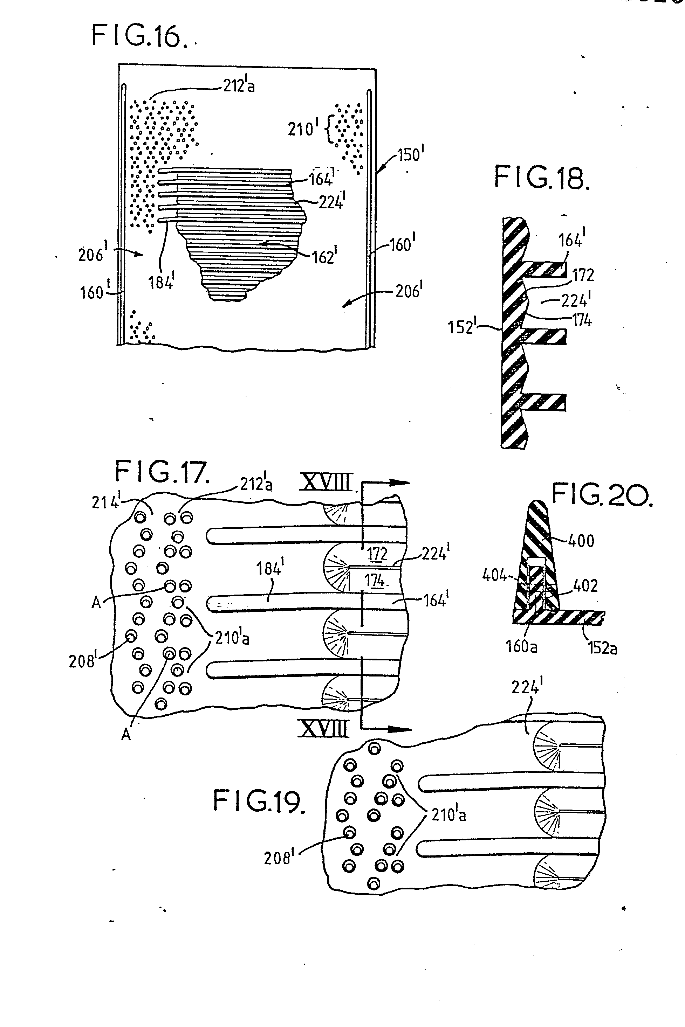

The mudflap 150' illustrated in FIGURES 16 to 19 is basically the same as that described in connection with FIGURES 12 to 15, the same or similar reference numerals being used to denote corresponding parts, and it is proposed to highlight only the main differences.

These differences reside principally in the pattern of the groups 210' of the flexible finger-like projections 208' in the columns 212'a thereof which lie immediately adjacent the open ends of the transverse channels 224' between adjacent horizontal bars or ribs 164'.

As in the embodiment of FIGURES 16 to 19 the base surface of the channels 224'a has a shallow inverted V-shaped ridged profile defining a pair of angled faces 172, 174, lying at an angle of about 18° to the plane of the base panel 152' so that liquid or fluid projected into the channels in a direction substantially at right angles to the plane of the base panel is then much less likely to be bounced straight back in the same direction and, instead, will tend to be deflected against the side surfaces of the ribs 164' whereby the kinetic energy absorption and spray control characteristics of the mudflap material are improved.

As shown, this inverted V-shaped profile of the base surface of the channels 224' terminates at the end of the straight horizontal sections of the channels, but if desired it could be continued substantially to the open ends of the channels with the ridge between the angled faces 172, 174, either following the contour of the inclined end portions 184' of the ribs or bars 164' so as to remain parallel thereto or remaining horizontal and converging towards the inclined end portion 184' of the adjacent rib 164' immediately above.

With regard to the pattern of the finger-like projections 208' in the lateral zones 206', 206', either side of the central zone 162', again these projections are basically arranged in staggered columns 212'a of rhombic groups 210' defining zig-zag vertical drainage paths 214'. In these columns 212'a, however the rhombic groups which lie immediately adjacent the open ends of the channels 224' (there are no rows corresponding to rows 190 of the previous embodiment) are incomplete since a vertical line of the innermost projections is omitted, as seen in FIGURES 16 and 17, leaving an unobstructed opening and flow path into the interior of the groups in this column for the liquid or fluid discharged from the ends of the channels 224'. The effect is similar to that of the zig-zag rows 202 in the previous embodiment and this pattern helps to bring about a more gradual controlled absorption or dissipation of the kinetic energy of the liquid or fluid and reduces the likelihood of excessive liquid or fluid being sprayed outwards in this region, reducing also the possibility of obstruction from debris building up at the ends of the channels. If desired, the groups 210a' of projections 208' in each such column 212'a adjacent the open ends of the transverse channels may be spaced further away from the latter than is indicated in FIGURE 17, again to reduce the possibility of obstructions building up which would impede the flow and proper drainage of the liquid or fluid.

In the further modification shown in FIGURE 19, the pattern of the finger-like projections 208' is similar to that shown in FIGURE 17 but a further projection (marked "A" in FIGURE 17) is omitted from the lower outermost part of each rhombic group 210'a in the column 212'a of groups nearest to the open ends of the transverse channels 24', thereby defining a somewhat wider drainage path extending obliquely outwards and downwards from the end of each transverse channel towards the adjacent vertical drainage path 214' and the next column 212'a of projections 208'.

In each of the embodiments so far described, the base sheet is provided with vertical side edge reinforcing ribs e.g. 160 in the embodiment of FIGURES 12 to 15, which project outwards to a depth similar to that of the horizontal bars or ribs. In some cases, however, it can be beneficial to performance to increase the depth of these vertical side ribs because they also act to contain any excess liquid which reaches the side boundary regions, and to avoid having to substantially increase the cost of the mould in order to achieve such increased depth the strategy indicated in FIGURE 20 may advantageously be adopted.   This shows a portion of a base panel 152a having a vertical side rib 160a fitted with a separately formed slotted cap member 400 which may be fixed in plate either by a suitable rubber cement 402 or by securing pins 404 indicated in broken lines.

Other modifications or additional and/or alternative arrangements may also be incorporated.

CLAIMS

1.  A spray-suppressant flap for use behind the wheels of a highway vehicle for limiting the amount of spray thrown into the air by operation of such a vehicle on a wet roadway, comprising:

(a)  an imperforate base member defining a generally planar base surface limited by a top and a bottom, and a pair of lateral marginal portions which extend vertically and define a width of said flap;

(b)  a plurality of substantially parallel, forwardly projecting, laterally-extending bars located on a first area of said base surface; and

(c)  a plurality of spray-suppressing members projecting forwardly from said base surface in a second area of said base surface located adjacent said first area thereof, said spray-suppressing members in said second area defining generally vertical channels with said base surface within said channels being free from said spray suppressing members.

2.  The spray-suppressant flap of claim 1 wherein said spray-suppressing members comprise generally parallel elongate flexible fingers, each said finger having a base and a central axis and having a length at least about 2-1/2 times as great as its maximum thickness, said fingers being located on and distributed over said base surface, so as to present additional surface area in the paths of fluid droplets traveling toward said spray-suppressant material, each of said fingers extending from said base surface, said plurality of fingers being arranged in a plurality of rhombic groups, said rhombic groups being arranged in parallel rows defining said generally vertical zig-zag channels between said rows.

3. The spray-suppressant flap of claim 1, including a plurality of forwardly projecting, laterally-extending ridges located on said first area of said base surface, between said laterally-extending bars, and parallel thereto.

4. The spray-suppressant flap of claim 3 wherein each of said ridges is centrally located between a pair of said substantially parallel, laterally-extending bars, and protrudes forward a distance substantially less than that by which said laterally-extending bars project forward.

5. The spray-suppressant flap of claim 4 wherein each of said ridges includes a pair of sloped surfaces and each of said laterally-extending bars includes respective forwardly projecting top and bottom

surfaces, said sloped surfaces and said forwardly projecting top and bottom surfaces defining respective interior angles in the range of 65-80°.

6. The spray-suppressant flap of claim 5 wherein the size of at least one of said interior angles is approximately 72°.

7. The spray-suppressant flap of claim 3 wherein each of said forwardly projecting laterally-extending bars includes a substantially horizontal central portion and a pair of opposite end portions which extend laterally outward beyond said ridges at a downward slope.

8. The spray-suppressant flap of claim 7 wherein said end portions are sloped downwardly at an angle between 0° and 5°.

9. The spray-suppressant flap of claim 8 wherein said outer ends are sloped downwardly at an angle of approximately 3°.

10. The spray-suppressant flap of claim 7 wherein said horizontal central portion and said ridges extend laterally a distance at least equal to one third of the width of said flap and said bars extend laterally a distance at least equal to a majority of the width of said flap, and said opposite end portions of said bars extend beyond said ridges a distance at least equal to the distance between vertically adjacent ones of said bars.

11. The spray-suppressant flap of claim 3, wherein said spray-suppressing members comprise generally parallel elongate flexible fingers, each said finger having a base and a central axis and having a length at least about 2-1/2 times as great as its maximum thickness, including a plurality of outwardly and downwardly sloping rows of said generally parallel elongate flexible fingers, located on said imperforate base member, said rows extending between respective ones of said parallel forwardly projecting, laterally-extending bars and said second area of said base surface.

12. The spray-suppressant flap of claim 11 wherein the individual flexible fingers of each of said outwardly and downwardly sloping rows are located in vertical alignment with corresponding ones of the fingers of other ones of said outwardly and downwardly sloping rows, defining generally vertical straight channels on said base surface, between said laterally-extending bars and said second area.

13. The spray-suppressant flap of claim 11, a plurality of said fingers being arranged on said base surface in said second area as a plurality of rhombic groups, said rhombic groups being arranged in a plurality of parallel rows defining generally vertical zig-zag channels between said rows of rhombic groups, and including a generally vertically aligned zig-zag row of said parallel elongate flexible fingers located on said base surface and defining a generally vertical zig-zag channel between said outwardly and downwardly sloping rows of forwardly-extending fingers and a closest one of said parallel rows of rhombic groups.

14. The spray-suppressant flap of claim 13 wherein the ones of said forwardly-extending fingers in each of said outwardly and downwardly sloping rows are spaced apart from one another a distance greater than the distance between the ones of said plurality of fingers arranged as each of said rhombic groups.

15. The spray-suppressant flap of claim 3 wherein said spray-suppressing members comprise generally parallel elongate flexible fingers, each said finger having a base and a central axis and having a length at least about 2-1/2 times as great as its maximum thickness and wherein each of said substantially parallel forwardly projecting laterally-extending bars includes a substantially horizontal central portion and a pair of opposite end portions which extend laterally along said base surface beyond said ridges and are laterally outwardly and downwardly sloped, and a plurality of outwardly and downwardly sloping rows of said elongate flexible fingers, each said row extending between a

- 36 -

0202059

respective one of said parallel forwardly projecting, laterally-extending bars and said second area of said base surface, each of said rows of fingers sloping downward more steeply than the downward slope of said opposite end portions of said parallel bars.

16. The spray-suppressant flap of claim 15, including a plurality of said fingers being arranged on said base surface in said second area as a plurality of rhombic groups, said rhombic groups being arranged in a plurality of parallel generally vertical rows defining generally vertical zig-zag channels between said rows of rhombic groups and said flap further including a generally vertically aligned zig-zag row of said parallel elongate flexible fingers defining a generally vertical zig-zag channel between said outwardly and downwardly sloping rows of forwardly-extending fingers and a closest one of said parallel rows of rhombic groups.

17. The spray-suppressant flap of claim 1 wherein said base member includes an upper portion and a lower portion conntected to each other along a lap joint extending generally parallel with said bottom, said upper portion along said lap joint being thicker than said lower portion, and said lower portion being aligned rearwardly of said upper portion and having a back side, said lap joint being held together by a plurality of fasteners extending through said upper and lower portions of said base member, each of said fasteners having an elarged head located on said back side of said lower portion.

18. The spray-suppressant flap of claim 17 wherein said upper portion includes a plurality of forwardly-projecting fastener-receiving protrusions each defining interior bore means adapted to receive one of said fasteners for attaching said lower portion to said upper portion.

19. The spray-suppressant flap of claim 18 wherein said lower portion defines hole means extending therethrough for receiving said fasteners, said hole means being larger than said bore means defined in said upper portion, and said fasteners fitting tightly in said bore means and loosely in said hole means.

20. Spray suppression material, for use as or in a device for reducing the production of clouds of spray by a road vehicle travelling at speed on wet road surfaces, comprising a base panel of planar sheet material having a spray-receiving surface, that is, a surface which in use is presented towards a road wheel of the vehicle, provided with a plurality of spray control protuberances arranged in a predetermined pattern and extending outwardly therefrom, characterised in that said pattern of spray control protuberances comprises a series of parallel ribs extending transversely across a central zone of the panel to define therebetween a series of parallel open-ended transverse channels and, distributed over zones adjacent to and bounding said central zone at either end of said transverse channels, a plurality of spaced-apart discrete elongate projections arranged to co-operate to progressively absorb or dissipate the kinetic energy of fluid discharged from the ends of said channels and to deflect such fluid into drainage flow paths defined between said projections.

21. A spray suppression device comprising a panel of sheet material of which a central zone is formed with transversely extending channels adapted to convey liquid or fluid impinging on said central zone towards laterally adjacent collection zones either side thereof, characterised in that said collection zones are covered with a plurality of spray-control protuberances adapted to absorb or dissipate kinetic energy of the moving liquid or fluid and progressively to deflect said liquid or fluid into downwardly extending flow paths.

FIG.1

FIG.3

FIG.2

FIG.4

FIG.5

FIG.6

FIG.7

FIG. 8

FIG. 9

FIG. 10

FIG. 11

0202059

FIG. 12

FIG. 14

FIG. 15

FIG:13

FIG.16.

FIG.18.

FIG.17.

FIG.20.

FIG.19.